# EUROPEAN PATENT APPLICATION

(11) **EP 4 588 709 A1**
(43) Date of publication of application: **23.07.2025**
(21) Application number: 24219051.0
(22) Date of filing: 11.12.2024
(51) Int. Cl.: B60L 15/20, B60L 50/60, B62D 15/02

(54) **MOTOR CONTROL UNIT AND POWERTRAIN FOR PARKING CONTROL, AND PARKING CONTROL METHOD**

(30) Priority: 18.01.2024 CN 202410077408
(71) Applicant: Huawei Digital Power Technologies Co., Ltd., Shenzhen, Guangdong 518043 (CN)
(72) Inventor: LU, Chunhong, 518043 Shenzhen (CN); YANG, Lizhou, 518043 Shenzhen (CN); REN, Xiaobin, 518043 Shenzhen (CN); YANG, Peng, , 518043 (CN)
(74) Representative: Gill Jennings & Every LLP

(57) **Abstract**

This application provides a motor control unit and powertrain having an automatic parking assist control function for an electric vehicle, and an automatic parking assist control method for an electric vehicle. The powertrain includes a motor control unit and a motor, and the motor control unit is configured to control the motor to output torque. In a traveling process of the electric vehicle, the motor control unit is configured to: in response to a torque signal, control the motor to output a torque value indicated by the torque signal. In a parking process of the electric vehicle, the motor control unit is configured to control the motor to drive the electric vehicle to travel by a preset distance. In a process in which the motor control unit controls the motor to drive the electric vehicle to travel by the preset distance, the motor control unit controls the torque output by the motor to change with a traveling distance of the electric vehicle. According to the powertrain, the motor control unit, and the control method provided in this application, a signal transmission delay in an automatic parking assist process of the electric vehicle can be reduced, and a speed and accuracy of control of the automatic parking assist process can be improved.

## Description

### TECHNICAL FIELD

This application relates to the field of electric vehicle control, and in particular, to a powertrain and motor control unit for parking control, and a parking control method.

### BACKGROUND

Automatic parking assist (automatic parking assist, APA) is an advanced parking solution. A vehicle having an automatic parking assist function can perform the following entire process without manual operations: performing automatic parking space recognition and automatic parking by using a sensor, a controller, and a corresponding execution structure. The automatic parking assist technology can reduce a risk caused by manual parking, and can also relieve driving pressure of a driver.

Currently, in an automatic parking assist scenario of an electric vehicle, a vehicle location sensing component performs spatial location detection to obtain a target location of the vehicle. An automatic parking assist module first performs closed-loop control based on the target location and a current location of the vehicle to obtain a target vehicle speed. The automatic parking assist module performs vehicle speed closed-loop control based on the target vehicle speed and a vehicle speed signal collected by a wheel speed sensor, to obtain target torque. A vehicle control unit sends a target torque signal to a motor control unit. Finally, the motor control unit controls a motor of the electric vehicle to output the target torque.

In the conventional technology, a signal transmission link in an automatic parking assist process of an electric vehicle is long. Consequently, a control delay of automatic parking assist is prolonged, and control accuracy is low, affecting efficiency, safety, and reliability of the automatic parking assist.

### SUMMARY

This application provides a motor control unit and powertrain for parking control, and a parking control method, to improve a control speed and control accuracy of an electric vehicle in an automatic parking assist process.

According to a first aspect, this application provides a motor control unit having an automatic parking assist control function for an electric vehicle. The motor control unit is configured to control a motor to output torque. In a traveling process of the electric vehicle, the motor control unit is configured to: in response to a torque signal, control the motor to output a torque value indicated by the torque signal. In a parking process of the electric vehicle, the motor control unit is configured to: in response to a distance signal, directly control a rotor of the motor to rotate by a preset angle. A distance that the rotor of the motor rotates by the preset angle to drive the electric vehicle to travel is a distance indicated by the distance signal.

A traveling process is a process in which when the electric vehicle normally travels or reverses, the motor control unit receives the torque signal from a vehicle control unit, and controls, based on the torque value indicated by the torque signal, the motor to output the torque to drive the electric vehicle to travel. In the traveling process of the electric vehicle, the vehicle control unit calculates a torque requirement of the vehicle based on a motion status of the vehicle and an acceleration signal, and sends the torque signal to the motor control unit to control the motor to output the torque indicated by the torque signal. However, in the parking process of the electric vehicle, the motor control unit enters a distance control mode, that is, the motor control unit uses a distance as a control target. Specifically, the motor control unit receives the distance signal, and directly controls the rotor of the motor to rotate by the preset angle, to drive the electric vehicle to travel by the distance indicated by the distance signal.

Direct control means that when receiving the distance signal, the motor control unit calculates a rotational speed and the torque, and controls the motor to output the torque to rotate by the preset angle without outputting the torque based on the torque value indicated by the torque signal output by the vehicle control unit. The distance signal may be directly sent by a motion domain controller to the motor control unit, or may be transparently transmitted by the motion domain controller to the motor control unit via the vehicle control unit. In comparison with a control manner in which the vehicle control unit receives the distance signal, calculates the torque, and outputs the torque signal to control the motor control unit to drive the motor, a control manner in which the motor control unit directly controls, based on a preset parking distance, the motor to output the torque to rotate by the preset angle shortens a signal link in an automatic parking assist process of the electric vehicle, thereby shortening a control delay and improving a control speed. In addition, because the signal link is shortened, an error in a signal transmission process is not amplified for a plurality of times, thereby improving control accuracy of the automatic parking assist process.

In an implementation of the first aspect, in the parking process of the electric vehicle, the motor control unit is configured to: stop controlling, based on an indication of the torque signal, the motor to output the torque, and control, based on the distance indicated by the distance signal, the rotor of the motor to rotate by the preset angle. In the parking process of the electric vehicle, the motor control unit enters the distance control mode, that is, stops controlling, based on the indication of the torque signal, the motor to output the torque, and controls, based on the distance indicated by the distance signal, the rotor of the motor to rotate by the preset angle.

In an implementation of the first aspect, the distance signal indicates the preset parking distance, in the parking process of the electric vehicle, the motor control unit is configured to directly control the motor to output the torque to control the rotor of the motor to rotate by the preset angle, to drive the electric vehicle to travel by the preset parking distance, and the preset parking distance is a distance between an initial vehicle location and a target parking location in the parking process of the electric vehicle.

In an implementation of the first aspect, in a process in which the motor control unit controls, based on the distance indicated by the distance signal, the rotor of the motor to rotate by the preset angle, the motor control unit controls the torque output by the motor to be different from the torque value indicated by the torque signal.

After the motor control unit enters the distance control mode, the motor control unit stops controlling, based on the indication of the torque signal, the motor to output the torque, but directly controls, based on the distance calculated by using the distance signal, the motor to output the torque. Therefore, the torque that the motor control unit controls the motor to output is different from the torque value indicated by the torque signal. It should be noted that the difference herein means that the torque that the motor control unit controls the motor to output and the torque value indicated by the torque signal are decoupled from each other, and therefore are different on the whole. However, a case in which the torque that the motor control unit controls the motor to output is the same as the torque value indicated by the torque signal at some time points by accident is not excluded.

In an implementation of the first aspect, in the parking process of the electric vehicle, the torque value indicated by the torque signal remains unchanged or the torque value indicated by the torque signal is zero. Alternatively, the torque value indicated by the torque signal is less than or equal to the torque that the motor control unit controls the motor to output.

In the automatic parking assist process of the electric vehicle, the motor control unit provided in this application may directly control the motor to output the torque. In other words, the torque signal output by the vehicle control unit no longer has a function of controlling the motor control unit to control the motor to output the torque. In this case, the torque value indicated by the torque signal remains unchanged or is equal to zero.

In an implementation of the first aspect, in the parking process of the electric vehicle, the motor control unit is configured to: in response to a remaining parking distance of the electric vehicle being greater than a first remaining distance, directly control the rotational speed of the motor to increase as the remaining parking distance decreases. The motor control unit is configured to: in response to the remaining parking distance of the electric vehicle being less than a second remaining distance, directly control the rotational speed of the motor to decrease as the remaining parking distance decreases. The remaining parking distance is a distance between a location and a target parking location of the electric vehicle in the parking process.

At an early stage of automatic parking assist of the electric vehicle, the motor control unit controls the rotational speed of the motor to increase as the remaining parking distance decreases. For example, when the remaining parking distance/the preset parking distance is greater than or equal to 0.8, the motor control unit is configured to control the rotational speed of the motor to increase. When the preset remaining distance is small, the motor control unit determines that the automatic parking assist process is about to end, and starts to reduce the rotational speed of the driven motor. For example, when the remaining parking distance/the preset parking distance is less than or equal to 0.1, the motor control unit is configured to control the rotational speed of the motor to gradually decrease. Therefore, at the early stage of the parking, the motor control unit directly controls the rotational speed of the motor to increase as the remaining parking distance decreases, so that parking efficiency of the electric vehicle can be improved. At a late stage of the parking, by directly controlling the rotational speed of the motor to decrease as the remaining parking distance decreases, the motor control unit may control the electric vehicle to gradually decelerate to prepare the electric vehicle for parking, thereby improving safety and reliability of the parking process of the electric vehicle. In addition, a long distance is set, so that a vehicle speed of the electric vehicle gradually decreases, thereby improving driving comfort of a driver and a passenger.

In an implementation of the first aspect, the motor control unit is configured to control the rotational speed of the motor to be less than a preset rotational speed limit. The preset rotational speed limit is determined based on a vehicle body motion status of the electric vehicle, a road condition, and the preset parking distance. The motor control unit provided in this application controls the rotational speed of the motor to be less than the preset rotational speed limit in the parking process of the electric vehicle, to improve the safety and the reliability of the parking of the electric vehicle. For example, the preset rotational speed limit is a rotational speed, of the motor, corresponding to a vehicle speed of 10 km/h of the electric vehicle.

In an implementation of the first aspect, the motor control unit is configured to control the rotational speed of the motor to be less than the preset rotational speed limit. When the remaining parking distance of the electric vehicle is greater than the first remaining distance, the preset rotational speed limit increases as the remaining parking distance decreases. When the remaining parking distance of the electric vehicle is less than the second remaining distance, the preset rotational speed limit decreases as the remaining parking distance decreases. The second remaining distance is less than the first remaining distance.

The preset rotational speed limit changes with a traveling distance in the parking process of the electric vehicle. At the early stage of the parking, the preset rotational speed limit is large, so that the parking efficiency of the electric vehicle can be improved. At the late stage of the parking, the preset rotational speed is small, so that the safety and the reliability of the parking of the electric vehicle can be improved.

In an implementation of the first aspect, in the parking process of the electric vehicle, in response to a parking signal and the distance signal, the motor control unit is configured to directly control the motor to drive the electric vehicle to travel by the preset parking distance. The distance signal indicates the preset parking distance, and the parking signal indicates the motor control unit to stop controlling, based on the indication of the torque signal, the motor to output the torque, and directly control the rotational speed and the torque that are output by the motor to change with the preset parking distance.

The parking signal is usually sent by the motion domain controller of the electric vehicle. After the driver sends a parking instruction, the motion domain controller determines the preset parking distance based on a current location and the target parking location of the electric vehicle. After receiving the parking signal, the motor control unit no longer controls the motor based on the indication of the torque signal, but directly determines a target rotational speed and target torque of the motor based on the preset parking distance. However, because the target rotational speed and the target torque of the motor are determined based on the preset parking distance, the rotational speed and the torque that are output by the motor change with the preset parking distance.

In an implementation of the first aspect, in response to a distance reset signal in a process of receiving the distance signal, the motor control unit is configured to re-control the motor to drive the electric vehicle to travel by a distance indicated by the distance reset signal.

In the automatic parking assist process of the electric vehicle, if a parking path of the electric vehicle changes, the motion domain controller needs to recalculate the preset distance based on the current location and the target parking location of the electric vehicle, and send the distance reset signal to the motor control unit. The distance reset signal indicates a distance between the current location and the target parking location of the electric vehicle after the parking path of the electric vehicle changes. In this case, the motor control unit still operates in the distance control mode, and the control target of the motor control unit changes to the distance indicated by the distance reset signal. In addition, a parking traveled distance recorded by the motor control unit is reset to zero.

In an implementation of the first aspect, in the parking process of the electric vehicle, the motor control unit is configured to: in response to a brake pedal stroke of the electric vehicle being greater than a preset brake pedal opening, an accelerator pedal stroke being greater than a preset accelerator pedal opening, or a slip rate of any wheel being greater than a preset slip rate, control the motor to output the torque based on an indication of the torque signal.

In the parking process of the electric vehicle, if the slip rate of the wheel is greater than the preset slip rate, it indicates that the slip rate of the wheel of the electric vehicle is excessively large, and the electric vehicle has a risk of vehicle body instability. In this case, the motor control unit exits the distance control mode, after electronic stability control or a traction control system of the vehicle performs calculation, the vehicle control unit outputs the torque signal based on a calculation result, and the motor control unit controls the motor to output the torque signal indicated by the torque signal, so that the electric vehicle maintains a stable state of a vehicle body. For example, the preset slip rate is 30%. In addition, in the parking process of the electric vehicle, if the brake pedal stroke is greater than the preset brake pedal opening or the accelerator pedal stroke is greater than the preset accelerator pedal opening, it indicates that the electric vehicle needs to accelerate or brake at this time. For the electric vehicle to accelerate or brake, at this time, the motor control unit exits the distance control mode, and controls the motor to output the torque based on the indication of the torque signal.

In an implementation of the first aspect, the motor control unit includes a resolver sensor, the motor control unit includes the resolver sensor, the motor control unit is configured to receive a rotational speed signal of the motor and a rotor angle signal from the resolver sensor, the rotational speed signal of the motor indicates a current rotational speed of the motor, and the rotor angle signal indicates a rotor rotation angle of the motor. The motor control unit is configured to adjust a rotational speed of the motor based on the current rotational speed, of the motor, indicated by the rotational speed signal of the motor. The motor control unit is configured to: determine a parking traveling distance of the electric vehicle based on the rotor rotation angle indicated by the rotor rotation angle signal, and output a parking traveling distance signal. The parking traveling distance signal indicates the parking traveling distance, and the parking traveling distance is a distance between a current vehicle location of the electric vehicle and an initial vehicle location.

The motor control unit obtains the rotational speed of the motor and the rotor rotation angle by using a resolver signal obtained by the resolver sensor disposed on the motor. The resolver has high sampling frequency, and the motor control unit can directly obtain the resolver signal. Therefore, a delay of obtaining a vehicle speed and a deceleration of the electric vehicle is reduced. In this way, the motor control unit can quickly determine a target rotational speed and target torque of the motor, to perform automatic parking assist, thereby improving the parking control speed and control accuracy.

In an implementation of the first aspect, operation modes of the motor control unit include a drive mode and a parking mode. When the motor control unit operates in the drive mode, the motor control unit is configured to control the motor to output the torque value indicated by the torque signal, where the torque signal is from the vehicle control unit of the electric vehicle. In response to a parking signal and the distance signal, the motor control unit operates in the parking mode, the motor control unit is configured to control the rotor of the motor to rotate by the preset angle, and the distance signal is from the motion domain controller of the electric vehicle.

In an implementation of the first aspect, the motor control unit is configured to: determine a target rotational speed based on the distance indicated by the distance signal or a distance indicated by a distance reset signal, determine target torque based on the target rotational speed, and control the motor to output the target torque. The motor control unit is configured to determine the target rotational speed based on a result of comparison between the distance indicated by the distance signal or the distance indicated by the distance reset signal and a traveling distance corresponding to a rotor angle signal. The motor control unit is configured to determine the target rotational speed based on comparison between the target rotational speed and a current rotational speed, of the motor, indicated by a rotational speed signal of the motor.

According to a second aspect, this application provides a powertrain having an automatic parking assist control function for an electric vehicle. The powertrain includes a motor control unit and a motor, and the motor control unit is configured to control the motor to output torque.

In a traveling process of the electric vehicle, the motor control unit is configured to: in response to a torque signal, control the motor to output a torque value indicated by the torque signal. In a parking process of the electric vehicle, the motor control unit is configured to: in response to a distance signal, directly control a rotor of the motor to rotate by a preset angle. A distance that the rotor of the motor rotates by the preset angle to drive the electric vehicle to travel is a distance indicated by the distance signal. In a process in which the motor control unit controls the motor to drive the electric vehicle to travel by a preset parking distance, the torque that the motor control unit controls the motor to output is not equal to the torque value indicated by the torque signal.

In an implementation of the second aspect, in the parking process of the electric vehicle, in response to a parking signal and the distance signal, the motor control unit is configured to control the motor to drive the electric vehicle to travel by the preset parking distance. The distance signal indicates the preset parking distance, and the parking signal indicates the motor control unit to stop controlling, based on an indication of the torque signal, the motor to output the torque, and directly control a rotational speed and the torque that are output by the motor to change with the preset parking distance.

Beneficial effect of the motor control unit according to the second aspect of this application is described in beneficial effect of the powertrain according to any one of implementations of the first aspect of this application. Details are not described herein again.

According to a third aspect, this application provides an automatic parking assist control method for an electric vehicle. The electric vehicle includes a vehicle control unit, the vehicle control unit is configured to send a torque signal to a motor control unit, the torque signal indicates a torque value, and the control method includes:
In response to a parking instruction, a motion domain controller outputs a distance signal and a parking signal. The parking instruction and the parking signal indicate that the electric vehicle is in a parking state, and the distance signal indicates a distance between a current location and a target parking location of the electric vehicle.

In response to the parking signal and the distance signal, the motor control unit directly controls the motor to output torque to control the motor to rotate by a preset angle, to drive the electric vehicle to travel by the distance indicated by the distance signal. A distance that the rotor of the motor rotates by the preset angle to drive the electric vehicle to travel is the distance indicated by the distance signal.

In a process in which the motor drives the electric vehicle to travel by the distance indicated by the distance signal, the torque output by the motor does not change with the torque value indicated by the torque signal.

In the automatic parking assist control method provided in this application, a motion domain controller first receives a location, of the electric vehicle, determined by a sensing system like radar of the electric vehicle. Then, the motion domain controller determines a preset parking distance based on the distance between the current location and the target parking location of the electric vehicle, and sends the distance to the motor control unit.

In an implementation of the third aspect, the control method includes:
In response to the distance signal, the motor control unit determines a target rotational speed and target torque of the motor based on the distance indicated by the distance signal, controls a rotational speed of the motor to be the target rotational speed, and controls the torque to be the target torque.

In an implementation of the third aspect, the control method includes:
In a process in which the motor control unit receives the distance signal, in response to a brake pedal stroke of the electric vehicle being greater than a preset brake pedal stroke, an accelerator pedal stroke being greater than a preset accelerator pedal stroke, or a slip rate of a wheel being greater than a preset slip rate, the motor control unit controls a torque value output by the motor to be equal to the torque value indicated by the torque signal.

Beneficial effect of the automatic parking assist control method according to the third aspect of this application is described as beneficial effect of the powertrain according to the first aspect or beneficial effect of the motor control unit according to the second aspect of this application. Details are not described herein again.

### BRIEF DESCRIPTION OF DRAWINGS

FIG. 1 is a diagram of an electric vehicle according to an embodiment of this application;
FIG. 2 is a diagram of a powertrain according to an embodiment of this application;
FIG. 3 is a schematic of a motor control unit according to an embodiment of this application;
FIG. 4 is a diagram of an automatic parking assist process of an electric vehicle;
FIG. 5 is a diagram of signal transmission in an automatic parking assist process of an electric vehicle;
FIG. 6 is a diagram of a control architecture of an electric vehicle according to an embodiment of this application;
FIG. 7 is an operation diagram of a powertrain according to an embodiment of this application;
FIG. 8a to FIG. 8c are diagrams of control modes of a motor control unit according to an embodiment of this application;
FIG. 9A and FIG. 9B are a control logic diagram of an automatic parking assist process of an electric vehicle;
FIG. 10 is a diagram of signal transmission in an automatic parking assist process of an electric vehicle according to an embodiment of this application; and
FIG. 11 is a signal interaction diagram in an automatic parking assist process of an electric vehicle.

### DESCRIPTION OF EMBODIMENTS

Terms used in the following embodiments are merely intended to describe particular embodiments, but are not intended to limit this application. The singular expression "one", "alan", "said", "the foregoing", "the", and "this" as used in this specification and the appended claims of this application are also intended to include expressions like "one or more", unless otherwise specified in the context clearly.

Reference to "an embodiment", "some embodiments", or the like described in this specification means that one or more embodiments of this application include a specific feature, structure, or characteristic described with reference to embodiments. Therefore, statements "in an embodiment", "in some embodiments", "in some other embodiments", "in still some other embodiments", and the like in different parts of this specification unnecessarily mean referring to a same embodiment, but mean "one or more embodiments but not all embodiments", unless otherwise specified particularly. Terms "include", "include", "have", and variants thereof all mean "including but not limited to", unless otherwise specified particularly.

To make the objectives, technical solutions, and advantages of this application clearer, the following further describes this application in detail with reference to the accompanying drawings.

With rapid development of the automobile industry, a plurality of assisted driving technologies and automated driving technologies are generated, so that driving pressure can be relieved, and safety and convenience can be improved. In the assisted driving technology, automatic parking assist (automatic parking assist, APA) is an advanced parking solution. A vehicle equipped with an automatic parking assist function can perform the following entire process without manual operations: performing automatic parking space recognition and automatic parking by using a sensor, a controller, and a corresponding execution structure. The automatic parking assist technology can reduce a risk caused by manual parking, and can also relieve the driving pressure of a driver.

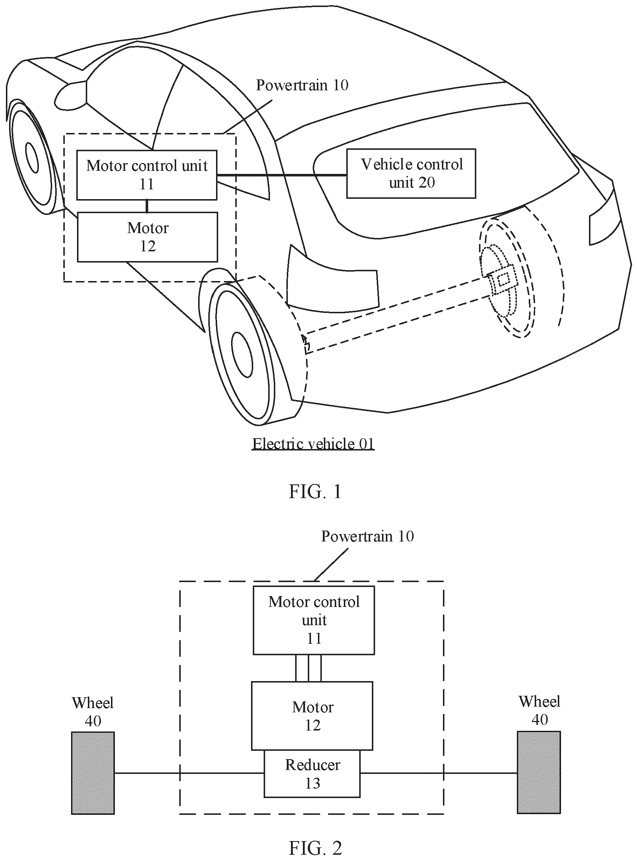

FIG. 1 is a diagram of an electric vehicle 01 according to an embodiment of this application. As shown in FIG. 1, the electric vehicle 01 includes a powertrain 10 and a vehicle control unit 20. FIG. 2 is a diagram of the powertrain 10 according to an embodiment of this application. The powertrain 10 includes a motor control unit 11 and a motor 12. In an operation process of the electric vehicle 01, the vehicle control unit 20 outputs a torque signal based on a current operating status of the electric vehicle 01. After receiving the torque signal, the motor control unit 11 controls the motor 12 to output a torque value indicated by the torque signal, and the motor 12 transmits torque to wheels 40 of the electric vehicle 01 via a reducer 13, to drive the wheels 40 of the electric vehicle 01.

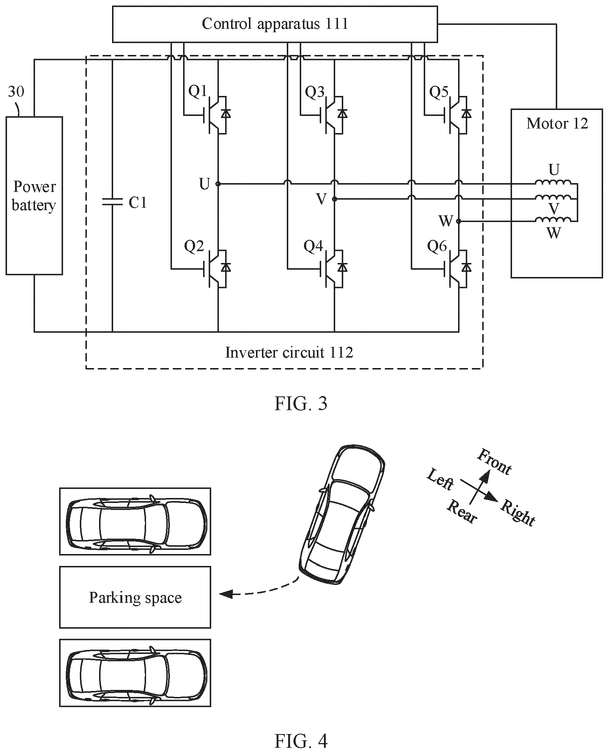

FIG. 3 is a schematic of the motor control unit 11 according to an embodiment of this application. As shown in FIG. 2, the motor control unit 11 includes a control apparatus 111 and an inverter circuit 112. The inverter circuit 112 includes a three-phase bridge arm, the motor 12 includes a three-phase winding, a bridge arm midpoint of each phase of bridge arm of the inverter circuit 112 is configured to connect to one phase of winding of the motor 12, and two ends of the three-phase bridge arm of the inverter circuit 112 are configured to receive power supplied by a power battery 30. In an operation process of the motor control unit 11, the inverter circuit receives the power supplied by the power battery 30, midpoints of the three-phase bridge arm of the inverter circuit 112 output a three-phase current to drive the motor 12 to output the torque.

A resolver sensor, a temperature sensor, and the like are disposed in the motor 12. The resolver sensor is configured to detect a rotational speed of the motor 12 and a rotor location. The temperature sensor is configured to detect a temperature of the motor 12. The control apparatus 111 is configured to receive a rotational speed signal of the motor 12, a rotor location signal, a temperature signal of the motor 12, and the like from the foregoing sensors.

FIG. 4 is a diagram of an automatic parking assist process of the electric vehicle 01. As shown in FIG. 4, an electric vehicle having an automatic parking assist function may automatically recognize a parking space and perform parking based on a calculated route. In the automatic parking assist process of the electric vehicle 01, the powertrain 10 provides a driving force in a parking process of the electric vehicle 01, so that the electric vehicle 01 can travel into the target parking space. In the parking process of the electric vehicle 01, longitudinal motion of the electric vehicle 01 is motion of the electric vehicle 01 along a longitudinal axis of a vehicle body, and the powertrain 10 may provide the driving force for the longitudinal motion of the electric vehicle 01 in the parking process of the electric vehicle 01.

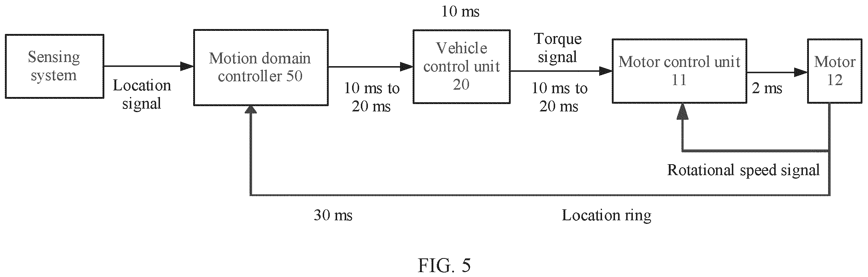

FIG. 5 is a control diagram in an automatic parking assist process of the electric vehicle 01. As shown in FIG. 5, after the electric vehicle 01 enables the automatic parking assist function, a vehicle sensing system sends a detected location signal of the electric vehicle 01 to a motion domain controller (Motion Domain Controller, MDC) 50. The motion domain controller 50 obtains a target vehicle speed through calculation based on a result of comparison between a target parking location and a current location, and sends the target vehicle speed to the vehicle control unit (Vehicle Control Unit, VCU) 20. The vehicle control unit 20 obtains target torque through calculation based on the target vehicle speed, and sends, to the motor control unit 11, the torque signal indicating the target torque. After receiving the torque signal, the motor control unit 11 controls the motor 12 to output the torque value indicated by the torque signal, to drive the electric vehicle 01 to complete the automatic parking assist process.

In the parking process of the electric vehicle 01, the motion domain controller 50 first needs to perform closed-loop control based on the target location and the current location of the vehicle, to obtain the target vehicle speed through calculation; and the motion domain controller 50 needs to perform closed-loop control based on the target vehicle speed and a vehicle speed detected by a wheel speed sensor, to obtain the target torque of the vehicle. Further, the motion domain controller 50 sends the target torque, obtained through calculation, of the vehicle to the vehicle control unit 20, the vehicle control unit 20 sends the target torque to the motor control unit 11, and the motor control unit 11 finally controls the motor 12 to output the target torque. It can be learned that, in the parking process of the electric vehicle 01, a signal needs to be transmitted through a plurality of layers. Along signal transmission link causes a long control delay in the parking process of the electric vehicle 01, and control accuracy is reduced, affecting safety, reliability, and accuracy in the parking process.

For example, as shown in FIG. 5, in the parking process of the electric vehicle 01, time of each step in a signal transmission process is shown in the figure. An operation period and a delay of each module in a parking process control solution of the electric vehicle 01 shown in FIG. 5 are as follows:
a. A sensing component senses a spatial location of an external environment, and determines the target location of the vehicle based on the parking space.
b. The motion domain controller 50 performs closed-loop control based on the target location and the current location (obtained through external sensing) of the vehicle to obtain the target vehicle speed of the vehicle, where a location loop operation period is 30 ms.
c. The motion domain controller 50 performs speed closed-loop based on the target vehicle speed of the vehicle and the vehicle speed detected by the wheel speed sensor, to obtain the target torque of the vehicle, where a speed closed-loop period is 10 ms.
d. The motion domain controller 50 delivers the target torque, obtained through calculation, to the vehicle control unit 20, and a transmission period is from 10 ms to 20 ms; a task period in which the vehicle control unit 20 processes CAN communication is 10 ms; and the vehicle control unit delivers the target torque of the motor 12 to the MCU, and a transmission period is from 10 ms to 20 ms (it should be clarified that because the motion domain controller 50 is located on a chassis CAN link, and the motor control unit 11 is located on a power CAN link, that is, the motion domain controller 50 and the motor control unit 11 are not located on a same link, the vehicle control unit 20 needs to transparently transmit a signal).
e. The motor control unit 11 receives the torque signal, and executes the corresponding torque; and both a task period in which the motor control unit 11 processes CAN communication and a task period in which the motor control unit 11 executes the torque are 2 ms.

An existing automatic parking assist technology is mainly controlled by an upper-layer controller (for example, the vehicle control unit 20), and finally, a torque instruction of the vehicle is obtained through calculation. The torque instruction is sent to the motor control unit 11 (Motor Control Unit, MCU), and finally, the motor control unit 11 controls the motor 12 of the vehicle to output a torque value indicated by the torque instruction. In an entire control process, the signal transmission link is long, resulting in a long control delay and low control accuracy. In other words, in a control architecture shown in FIG. 5, the motor control unit 11 is an execution apparatus, and does not perform calculation and decision-making processes. The calculation and decision-making processes are mainly completed by the upper-layer controller and by sending corresponding instructions to the motor control unit 11.

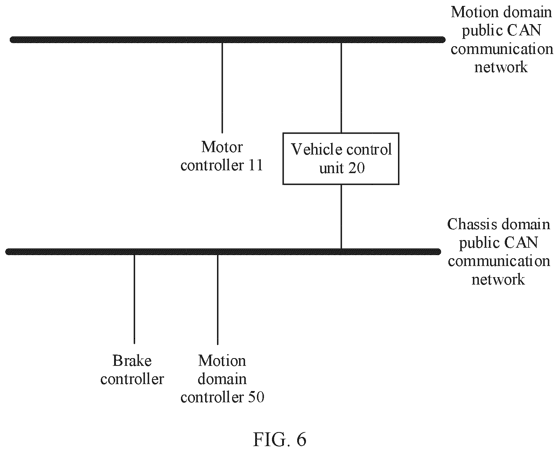

Further, FIG. 6 is a diagram of a control architecture of the electric vehicle 01 according to an embodiment of this application. A vehicle communication network of the electric vehicle 01 includes a motion domain public CAN communication network and a chassis domain public CAN communication network. The motor control unit 11 is a communication node on the motion domain public CAN communication network, and the motion domain controller 50 is a communication node on the chassis domain public CAN communication network. The vehicle control unit 20 is connected to both the motion domain public CAN communication network and the chassis domain public CAN communication network. In other words, the motion domain public CAN communication network and the chassis domain public CAN communication network may exchange signals via the vehicle control unit 20. For example, a signal sent by the motion domain controller 50 may be directly and transparently transmitted by the vehicle control unit 20 to the motor control unit 11.

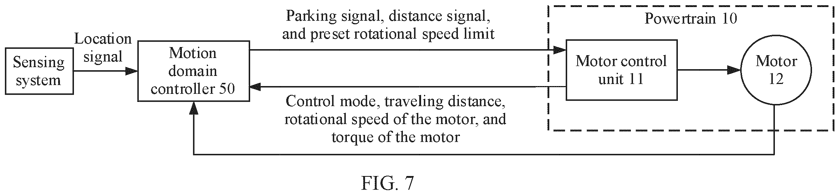

FIG. 7 is an operation diagram of the powertrain 10 having an automatic parking assist function according to an embodiment of this application. The powertrain 10 includes the motor control unit 11 and the motor 12. Specific diagrams of structures of the motor control unit 11 and the motor 12 are described as above. Details are not described herein again. As shown in FIG. 7, the motor control unit 11 provided in this embodiment of this application may directly receive a related signal from the motion domain controller 50, and directly control the motor 12 to output the torque to provide the driving force in the parking process of the electric vehicle 01. The following describes in detail specific implementations of the powertrain 10 and the motor control unit 11 that have the automatic parking assist function with reference to specific embodiments.

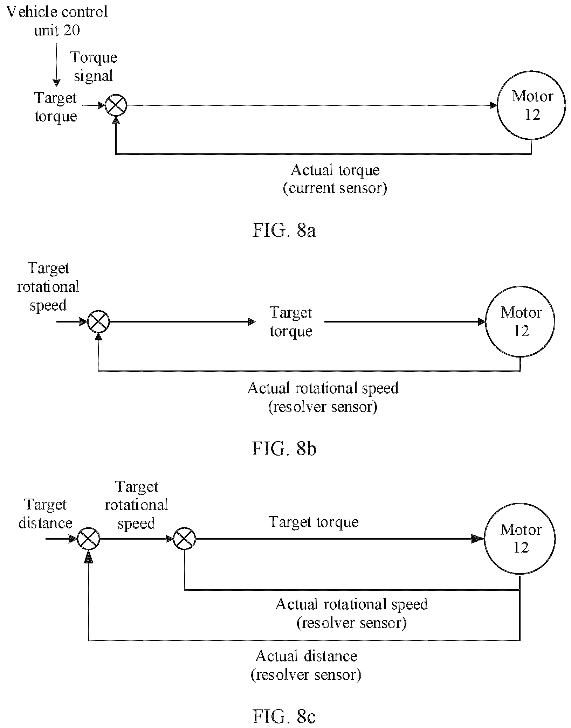

Operation modes of the motor control unit 11 provided in this embodiment of this application include a torque control mode, a rotational speed control mode, and a distance control mode. FIG. 8a to FIG. 8c are diagrams of the motor control unit 11 operating in the torque control mode, the rotational speed control mode, and the distance control mode respectively.

The torque control mode is an operation mode in which the motor control unit 11 uses the torque output by the motor 12 as a control target. As shown in FIG. 8a, the motor control unit 11 operates in the torque control mode. The motor control unit 11 uses the torque value indicated by the torque signal from the vehicle control unit 20 as the target torque, and calculates actual torque of the motor 12 based on the three-phase current of the motor 12 from a current sensor, to implement closed-loop control om the torque of the motor 12. Specifically, the motor control unit 11 calculates, based on the target torque, a target direct-axis current and a target quadrature-axis current that are required by the motor 12. In addition, the motor control unit 11 obtains the three-phase current value, of the motor 12, monitored by the current sensor, to calculate a corresponding actual direct-axis current, calculates a target drive voltage based on a result of comparison between the target direct-axis current and the actual direct-axis current and a result of comparison between the target quadrature-axis current and an actual quadrature-axis current, and finally generates a drive signal based on the target drive voltage to drive the bridge arm midpoint of the three-phase bridge arm to generate the target drive voltage. The target drive voltage generates a drive current on the winding of the motor 12 to control the motor 12 to output the target torque, thereby implementing closed-loop control on the output torque corresponding to the motor 12.

The rotational speed control mode is an operation mode in which the motor control unit 11 uses the rotational speed of the motor 12 as a control target. As shown in FIG. 8b, the motor control unit 11 calculates the target torque based on a result of comparison between a target rotational speed and an actual rotational speed of the motor 12, and controls the motor 12 to output the target torque, so that the motor 12 outputs the target rotational speed. The motor control unit 11 receives the rotational speed signal of the motor 12 from the resolver sensor to obtain the actual rotational speed of the motor 12, to implement closed-loop control on the rotational speed of the motor 12.

The distance control mode is an operation mode in which the motor control unit 11 targets an actual operation distance of the electric vehicle 01 driven by the motor 12. As shown in FIG. 8c, the motor control unit 11 calculates a target rotational speed of the motor 12 based on a target distance, calculates the target torque based on the target rotational speed, and enables the motor 12 to output the target torque. The motor control unit 11 obtains an actual rotational speed of the motor 12 by using the rotational speed signal of the motor 12 from the resolver sensor, and obtains a rotor rotation angle of the motor 12 by using a rotor angle signal from the resolver sensor, to obtain an actual traveling distance of the vehicle through conversion.

Operation modes of the powertrain 10 provided in this embodiment of this application include a drive mode and a parking mode. The drive mode of the powertrain 10 is an operation mode of the powertrain 10 in a traveling process of the electric vehicle 01, and the parking mode of the powertrain 10 is an operation mode of the powertrain 10 in the automatic parking assist process of the electric vehicle 01.

When the powertrain 10 operates in the driving mode, the motor control unit 11 controls the motor 12 to output the torque value indicated by the torque signal from the vehicle control unit 20. In the traveling process of the electric vehicle 01, the motor control unit 11 is configured to: in response to the torque signal, control the motor 12 to output the torque value indicated by the torque signal.

When the powertrain 10 operates in the parking mode, the corresponding motor control unit 11 operates in the distance control mode, and the motor control unit 11 stops controlling, based on an indication of the torque signal, the motor 12 to output the torque. In other words, the torque that the motor control unit 11 controls the motor 12 to output does not change with the torque value indicated by the torque signal. The motor control unit 11 controls a preset rotation angle corresponding to a distance indicated by a rotor rotation distance signal of the motor 12, where the distance signal is from the motion domain controller 50 of the electric vehicle 01. The motion domain controller 50 is configured to: determine a preset parking distance based on the current location and the target parking location of the electric vehicle 01 that are sensed by the location sensing component like radar of the electric vehicle 01, and output the distance signal indicating the preset parking distance. The preset parking distance is a distance between the location at a moment at which the electric vehicle 01 starts automatic parking assist and the target parking location.

In the traveling process of the electric vehicle 01, the motor control unit 11 is configured to: in response to the torque signal, control the motor 12 to output the torque value indicated by the torque signal. In the parking process of the electric vehicle 01, the motor control unit 11 is configured to: in response to the distance signal, directly control the rotor of the motor 12 to rotate by the preset angle. A distance that the rotor of the motor rotates by the preset angle to drive the electric vehicle to travel is the distance indicated by the distance signal.

The traveling process is a process in which when the electric vehicle 01 normally travels or reverses, the motor control unit 11 receives the torque signal from the vehicle control unit 20, and controls, based on the torque value indicated by the torque signal, the motor 12 to output the torque to drive the electric vehicle 01 to travel. In the traveling process of the electric vehicle 01, the vehicle control unit 20 calculates a torque requirement of the vehicle based on a motion status of the vehicle and an acceleration signal, and sends the torque signal to the motor control unit 11 to control the motor 12 to output the torque indicated by the torque signal. However, in the parking process of the electric vehicle 01, the motor control unit 11 enters the distance control mode, that is, the motor control unit 11 uses a distance as the control target. Specifically, the motor control unit 11 receives the distance signal, and directly controls the rotor of the motor 12 to rotate by the preset angle, to drive the electric vehicle 01 to travel by the distance indicated by the distance signal.

Direct control means that when receiving the distance signal, the motor control unit 11 calculates the rotational speed and the torque, and controls the motor 12 to output the torque to rotate by the preset angle without outputting the torque based on the torque value indicated by the torque signal output by the vehicle control unit 20. The distance signal may be directly sent by the motion domain controller to the motor control unit, or may be transparently transmitted by the motion domain controller to the motor control unit via the vehicle control unit. In comparison with the parking control assist manner shown in FIG. 5, a control manner in which the motor control unit 11 directly controls, based on the preset parking distance, the motor 12 to output the torque to rotate by the preset angle shortens a signal link in the automatic parking assist process of the electric vehicle 01, thereby shortening the control delay and improving a control speed. In addition, because the signal link is shortened, an error in the signal transmission process is not amplified for a plurality of times, thereby improving the control accuracy of the automatic parking assist process.

In this embodiment of this application, in the parking process of the electric vehicle 01, the motor control unit 11 is configured to: stop controlling, based on the indication of the torque signal, the motor to output the torque, and control, based on the distance indicated by the distance signal, the rotor of the motor 12 to rotate by the preset angle. In the parking process of the electric vehicle 01, the motor control unit 11 enters the distance control mode, that is, stops controlling, based on the indication of the torque signal, the motor to output the torque, and controls, based on the distance indicated by the distance signal, the rotor of the motor 12 to rotate by the preset angle.

In the parking process of the electric vehicle 01, the motor control unit 11 provided in this embodiment of this application is configured to directly control the motor 12 to output the torque, to drive the electric vehicle 01 to travel by the preset parking distance, and the preset parking distance is a distance between an initial vehicle location and the target parking location in the parking process of the electric vehicle 01. In a process in which the motor control unit 11 controls the motor 12 to drive the electric vehicle 01 to travel by the preset parking distance, the torque that the motor control unit 11 controls the motor 12 to output is not equal to the torque value indicated by the torque signal.

In the normal traveling process of the electric vehicle 01, the powertrain 10 provided in this application receives the torque signal from the vehicle control unit 20, and outputs the torque based on the torque value indicated by the torque signal. In other words, the torque actually output by the motor 12 is the same as the torque value indicated by the torque signal, and the motor control unit 11 cannot determine the torque value output by the motor 12. In the parking process of the electric vehicle 01, the motor control unit 11 directly controls the motor 12 to output the torque to drive the electric vehicle 01 to complete the parking process without outputting the torque based on the torque value indicated by the torque signal output by the vehicle control unit 20. In other words, the motor control unit 11 determines, based on the preset parking distance of the electric vehicle 01, the target torque output by the motor 12, and controls the motor 12 to output the target torque. That the motor control unit 11 directly controls, based on the preset parking distance, the motor 12 to output the torque shortens the signal link in the automatic parking assist process of the electric vehicle, thereby shortening the control delay and improving the control speed. In addition, because the signal link is shortened, the error in the signal transmission process is not amplified for the plurality of times, thereby improving the control accuracy of the automatic parking assist process.

In this embodiment of this application, in a process in which the motor control unit 11 controls, based on the distance indicated by the distance signal, the rotor of the motor 12 to rotate by the preset angle, the motor control unit 11 controls the torque output by the motor 12 to be different from the torque value indicated by the torque signal.

After the motor control unit 11 enters the distance control mode, the motor control unit 11 stops controlling, based on the indication of the torque signal, the motor 12 to output the torque, but directly controls, based on the distance calculated by using the distance signal, the motor to output the torque. Therefore, the torque that the motor control unit 11 controls the motor 12 to output is different from the torque value indicated by the torque signal. It should be noted that the difference herein means that the torque that the motor control unit controls the motor to output and the torque value indicated by the torque signal are decoupled from each other, and therefore are different on the whole. However, a case in which the torque that the motor control unit 11 controls the motor 12 to output is the same as the torque value indicated by the torque signal at some time points by accident is not excluded.

In this embodiment of this application, in the parking process of the electric vehicle, the torque value indicated by the torque signal remains unchanged or the torque value indicated by the torque signal is zero. Alternatively, the torque value indicated by the torque signal is less than or equal to the torque that the motor control unit controls the motor to output.

In the automatic parking assist process of the electric vehicle, the motor control unit provided in this application may directly control the motor to output the torque. In other words, the torque signal output by the vehicle control unit no longer has a function of controlling the motor control unit to control the motor to output the torque. In this case, the torque value indicated by the torque signal remains unchanged or is equal to zero.

In this embodiment of this application, in the parking process of the electric vehicle 01, the motor control unit 11 is configured to: in response to a brake pedal stroke of the electric vehicle 01 being greater than a preset brake pedal opening, an accelerator pedal stroke being greater than a preset accelerator pedal opening, or a slip rate of any wheel being greater than a preset slip rate, control the motor to output the torque based on the indication of the torque signal.

In the parking process of the electric vehicle 01, if the slip rate of the wheel 40 is greater than the preset slip rate, it indicates that the slip rate of the wheel 40 of the electric vehicle 01 is excessively large, and the electric vehicle has a risk of vehicle body instability. In this case, the motor control unit 11 exits the distance control mode, after electronic stability control or a traction control system of the electric vehicle 01 performs calculation, the vehicle control unit outputs the torque signal based on a calculation result, and the motor control unit 11 controls the motor to output the torque signal indicated by the torque signal, so that the electric vehicle 01 maintains a stable state of the vehicle body. For example, the preset slip rate is 30%. In addition, in the parking process of the electric vehicle 01, if the brake pedal stroke is greater than the preset brake pedal opening or the accelerator pedal stroke is greater than the preset accelerator pedal opening, it indicates that the electric vehicle needs to accelerate or brake at this time. For the electric vehicle 01 to accelerate or brake, at this time, the motor control unit 11 exits the distance control mode, and controls the motor 12 to output the torque based on the indication of the torque signal.

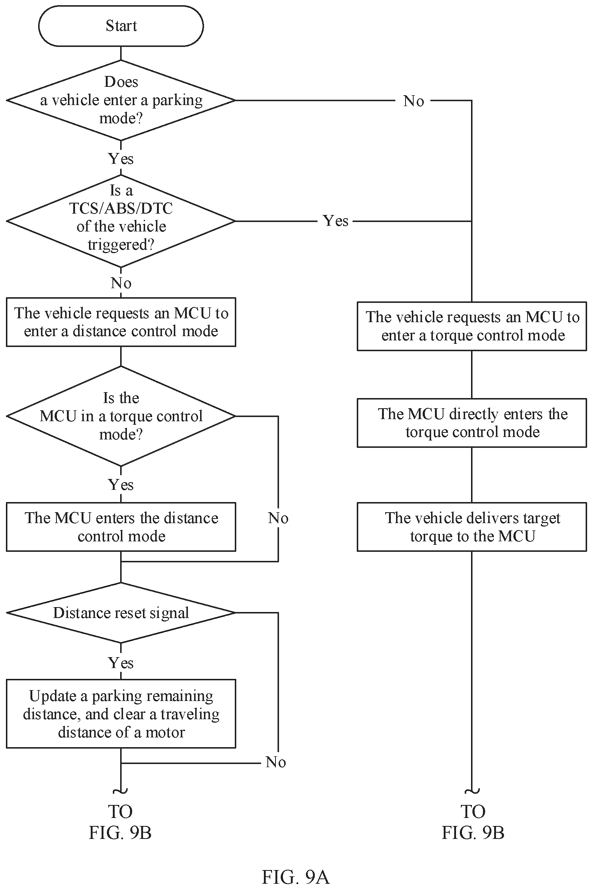

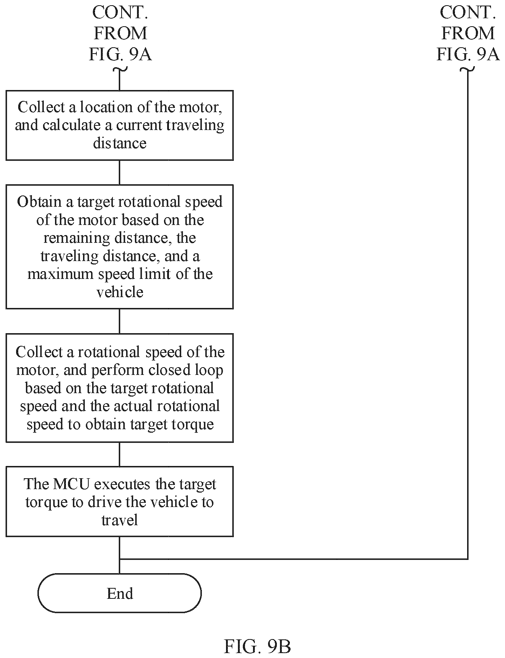

FIG. 9A and FIG. 9B are a diagram of a process in which the powertrain 10 is configured to implement the automatic parking assist function according to an embodiment of this application. The following describes in detail, with reference to FIG. 9A and FIG. 9B and a specific embodiment, the process in which the powertrain 10 implements the automatic parking assist function according to the embodiment of this application.

First, the electric vehicle 01 enters a parking state in response to a parking instruction. The parking instruction may be an operation of a driver. For example, the driver presses a parking button, so that the electric vehicle 01 enters the parking state. The parking instruction may alternatively be from an automated driving system.

After the electric vehicle 01 enters the parking state, if a preset condition is met, the traction control system (Traction Control System, TCS) or an anti-lock braking system (Anti-lock Braking System, ABS) of the electric vehicle is triggered, the traction control system or the anti-lock braking system requests, via the vehicle control unit 20, the motor control unit 11 to enter the torque control mode. The traction control system or the anti-lock braking system calculates, based on the motion status of the electric vehicle 01, the target torque that needs to be output by the motor 12, and sends a control signal to the vehicle control unit 20, to control the vehicle control unit 20 to output the torque signal indicating the target torque. In the torque control mode, the motor control unit 11 receives the torque signal and controls the motor 12 to output the torque value indicated by the torque signal. The preset condition herein refers to a condition in which the traction control system (Traction Control System, TCS) or the anti-lock braking system (Anti-lock Braking System, ABS) is triggered. This condition is determined by the traction control system or the anti-lock braking system based on the motion status of the electric vehicle 01. For example, the preset condition may be the slip rate of the wheel 40 being greater than the preset slip rate in a moving process of the electric vehicle 01.

If the traction control system or the anti-lock braking system is not triggered, the powertrain 10 enters the parking mode, and correspondingly, the motor control unit 11 enters the distance control mode. In this case, if a moving mode of the motor control unit 11 is the distance control mode, the motor control unit 11 keeps moving in the distance control mode. If the moving mode of the motor control unit 11 is the torque control mode or the rotational speed control mode, the motor control unit 11 switches to the distance control mode.

In addition, in the parking process of the electric vehicle 01, the motor control unit 11 is configured to: in response to the brake pedal stroke of the electric vehicle 01 being greater than the preset brake pedal stroke or the accelerator pedal stroke being greater than the preset accelerator pedal stroke, control the motor 12 to output the torque based on the indication of the torque signal. In other words, in the automatic parking assist process, when the driver steps on a brake pedal or an accelerator pedal, it indicates that the driver has a braking intention or an accelerating intention. In this case, the electric vehicle 01 automatically exits the automatic parking assist function to respond to the driving intention of the driver. The preset brake pedal stroke is a preset brake pedal stroke that can accurately identify that the driver has the braking intent, and is mainly used to eliminate a measurement error or measurement disturbance of a brake pedal sensor and a misoperation of the driver by lightly stepping on the brake pedal. It indicates that the driver has the braking intention or the accelerating intention. In this case, the electric vehicle 01 automatically exits the automatic parking assist function to respond to the driving intention of the driver The preset accelerator pedal stroke is an accelerator pedal stroke that can accurately identify that the driver has the accelerating intent, and is mainly used to eliminate a measurement error or measurement disturbance of an accelerator pedal sensor and a misoperation of the driver by lightly stepping on the accelerator pedal.

Further, the motion domain controller 50 receives a vehicle location signal of the sensing system of the electric vehicle 01. The vehicle location signal indicates the current location of the vehicle, and the motion domain controller 50 determines the preset parking distance based on the current location and the target parking location of the electric vehicle 01. The motion domain controller 50 determines a rotational speed limit based on the preset parking distance, a parking road condition, and the motion status of the electric vehicle 01. In the automatic parking assist process of the electric vehicle 01, the rotational speed of the motor 12 does not exceed the rotational speed limit, to ensure safety of the parking of the electric vehicle 01. For example, the preset rotational speed limit is a rotational speed, of the motor 12, corresponding to a vehicle speed of 10 km/h of the electric vehicle 01. After obtaining the preset parking distance through calculation, the motion domain controller 50 sends a parking signal, a distance signal, and a preset rotational speed limit signal to the motor control unit 11. The distance signal indicates the preset parking distance, the parking signal is used to control the motor control unit 11 to stop controlling, based on the indication of the torque signal, the motor 12 to output the torque and enter the distance control mode, and the preset rotational speed limit signal indicates the preset rotational speed limit.

In an embodiment, when a remaining parking distance of the electric vehicle is greater than a first remaining distance, the preset rotational speed limit increases as the remaining parking distance decreases. When the remaining parking distance of the electric vehicle is less than a second remaining distance, the preset rotational speed limit decreases as the remaining parking distance decreases. The second remaining distance is less than the first remaining distance.

The preset rotational speed limit changes with a traveling distance in the parking process of the electric vehicle. At an early stage of the parking, the preset rotational speed limit is large, so that parking efficiency of the electric vehicle can be improved. At a late stage of the parking, the preset rotational speed is small, so that the safety and the reliability of the parking of the electric vehicle can be improved. For example, the first remaining distance is 80% of the preset parking distance, and the second remaining distance is 10% of the preset parking distance.

In an embodiment, the motion domain controller 50 determines the preset rotational speed limit based on a vehicle body motion status, the road condition, and the like of the electric vehicle 01, to improve the safety and the reliability of the parking of the electric vehicle 01. For example, the preset rotational speed limit is related to a road adhesion coefficient. When the road adhesion coefficient is less than or equal to 0.2, the preset rotational speed limit is less than or equal to 5 km/h, and the preset rotational speed limit decreases as the road adhesion coefficient decreases. For example, the preset rotational speed limit is related to a slip rate of any wheel. When the slip rate of the wheel is greater than 0.2, the preset rotational speed limit is less than or equal to 5 km/h.

The motor control unit 11 is configured to: in response to the parking signal, the distance signal, and the preset rotational speed limit signal, directly control the motor 12 to drive the electric vehicle 01 to travel by the preset parking distance. The parking signal indicates the motor control unit 11 to stop controlling, based on the indication of the torque signal, the motor 12 to output the torque, and directly control the rotational speed and the torque that are output by the motor 12 to change with the preset parking distance.

The parking instruction is usually sent by the motion domain controller 50 of the electric vehicle 01. After the driver sends the parking instruction, the motion domain controller 50 determines the preset parking distance based on the current location and the target parking location of the electric vehicle 01. After receiving the parking signal, the motor control unit 11 no longer controls the motor 12 based on the indication of the torque signal, but directly determines the target rotational speed and the target torque of the motor 12 based on the preset parking distance. However, because the target rotational speed and the target torque of the motor 12 are determined based on the preset parking distance, the rotational speed and the torque that are output by the motor 12 change with the preset parking distance.

As described above, in the automatic parking assist process of the electric vehicle 01, the motor control unit 11 operates in the distance control mode. The distance control mode refers to a control mode in which the motor control unit 11 uses a preset distance as the control target. In the distance control mode, the motor control unit 11 no longer controls, based on the torque value indicated by the torque signal output by the vehicle control unit 20, the motor 12 to output the torque. In other words, in this case, the torque value indicated by the torque signal and the torque value that the motor control unit 11 controls the motor 12 to output are decoupled from each other. In an embodiment, in the parking process of the electric vehicle 01, the torque that the motor control unit 11 controls the motor 12 to output is not equal to the torque value indicated by the torque signal. In an embodiment, the torque value indicated by the torque signal remains unchanged or the torque value indicated by the torque signal is zero. In an embodiment, the torque value indicated by the torque signal is less than or equal to the torque that the motor control unit 11 controls the motor 12 to output.

In this embodiment of this application, the powertrain 10 includes the resolver sensor, the motor control unit 11 is configured to receive the rotational speed signal of the motor 12 and the rotor angle signal from the resolver sensor, the rotational speed signal of the motor 12 indicates a current rotational speed of the motor 12, and the rotor angle signal indicates the rotor rotation angle of the motor 12. The motor control unit is configured to: receive the rotor angle signal of the motor 12 from the resolver sensor, calculate the parking traveling distance of the electric vehicle 01 based on a change amount that is of a rotor angle of the motor 12 and that is indicated by the rotor angle signal, and send the parking traveling distance to the motion domain controller 50. Specifically, the motor 12 calculates a change amount of an angle of the wheel 40 of the electric vehicle 01 based on the change amount of the rotor angle of the motor 12 and a deceleration ratio of the reducer of the powertrain 10, to obtain a traveled distance of the electric vehicle 01 in the automatic parking assist process. For example, if the change amount of the rotor angle of the motor 12 is α, the deceleration ratio of the reducer is n, and a radius of the wheel 40 of the electric vehicle 01 is n, a rotation angle of the wheel 40 is α/n, and correspondingly, the traveling distance of the electric vehicle 01 is R*α/(n*180).

In addition, the resolver sensor may be further configured to monitor the rotational speed of the motor 12, and the motor control unit 11 is configured to adjust the rotational speed of the motor 12 based on the current rotational speed, of the motor 12, indicated by the rotational speed signal of the motor 12 from the resolver sensor.

The motor control unit 11 provided in this embodiment of this application obtains the rotational speed of the motor 12 and the rotor rotation angle by using a resolver signal obtained by the resolver sensor disposed on the motor 12. The resolver has high sampling frequency, and the motor control unit 11 can directly obtain the resolver signal. Therefore, a delay of obtaining the vehicle speed and a deceleration of the electric vehicle is reduced. In this way, the motor control unit 11 can quickly determine the target rotational speed and the target torque of the motor 12, to perform automatic parking assist, thereby improving the parking control speed and control accuracy.

In the parking process of the electric vehicle 01, the motor control unit 11 is configured to: in response to the remaining parking distance of the electric vehicle 01 being greater than the first remaining distance, directly control the rotational speed of the motor 12 to increase as the remaining parking distance decreases. The motor control unit 11 is configured to: in response to the remaining parking distance of the electric vehicle 01 being less than the second remaining distance, directly control the rotational speed of the motor 12 to decrease as the remaining parking distance decreases. The remaining parking distance is the distance between the location and the target parking location of the electric vehicle 01 in the parking process.

For example, the motor control unit 11 is configured to: in response to the remaining parking distance being less than the second preset remaining distance, control the rotational speed of the motor 12 to gradually decrease. In other words, when the preset remaining distance is small, the motor control unit 11 determines that the automatic parking assist process is about to end, and starts to reduce the rotational speed of the driven motor 12. For example, when the second remaining distance/the remaining parking distance is less than or equal to 0.1, the motor control unit 11 is configured to control the rotational speed of the motor 12 to gradually decrease.

For example, the motor control unit 11 is configured to: in response to the remaining parking distance being zero, control the rotational speed of the motor 12 to be equal to zero. When the remaining parking distance is zero, it indicates that the electric vehicle 01 has entered the target parking location. The motor control unit 11 controls the rotational speed of the motor 12 to be zero, so that the motor 12 stops rotating, and the electric vehicle 01 stops at the target parking location.

The motor control unit 11 of the powertrain 10 provided in this embodiment of this application may adjust the rotational speed and the torque of the motor 12 based on the remaining parking distance, so that the electric vehicle 01 can travel smoothly and reliably in the automatic parking assist process. This improves the reliability of the automatic parking assist and driving comfort of a driver and a passenger.

Still refer to FIG. 9A and FIG. 9B. In the automatic parking assist process of the electric vehicle 01, if a parking path of the electric vehicle 01 changes, the motion domain controller 50 needs to recalculate the preset distance based on the current location and the target parking location of the electric vehicle 01, and send a distance reset signal to the motor control unit 11. The distance reset signal indicates a distance between the current location and the target parking location of the electric vehicle 01 after the parking path of the electric vehicle 01 changes. In this case, the motor control unit 11 still operates in the distance control mode, and the control target of the motor control unit 11 changes to the distance indicated by the distance reset signal. In addition, a parking traveled distance recorded by the motor control unit 11 is reset to zero.

In the automatic parking assist process of the electric vehicle 01, there are a plurality of scenarios in which the parking path is replanned. For example, if the electric vehicle 01 encounters an obstacle in the parking process, the electric vehicle 01 needs to stop and replan the parking path to avoid collision with the obstacle. For another example, if the target parking location changes or the current location or the target parking location, of the electric vehicle 01, monitored by the sensing system of the electric vehicle 01 is updated, the parking path also needs to be replanned.

The motor control unit 11 provided in this embodiment of this application is configured to: determine the target rotational speed based on the distance indicated by the distance signal or the distance indicated by the distance reset signal, determine the target torque based on the target rotational speed, and control the motor 12 to output the target torque. The motor control unit 11 is configured to determine the target rotational speed based on a result of comparison between the distance indicated by the distance signal or the distance indicated by the distance reset signal and a traveling distance corresponding to the rotor angle signal. The motor control unit 11 is configured to determine the target rotational speed based on comparison between the target rotational speed and the current rotational speed, of the motor 12, indicated by the rotational speed signal of the motor 12.

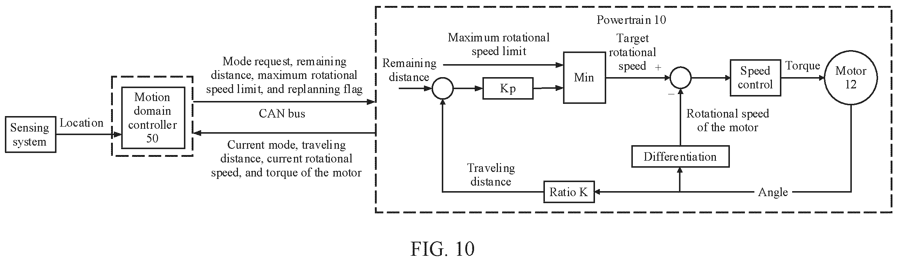

FIG. 10 is a diagram of signal transmission in an automatic parking assist process of an electric vehicle according to an embodiment of this application. Details are not described herein again.

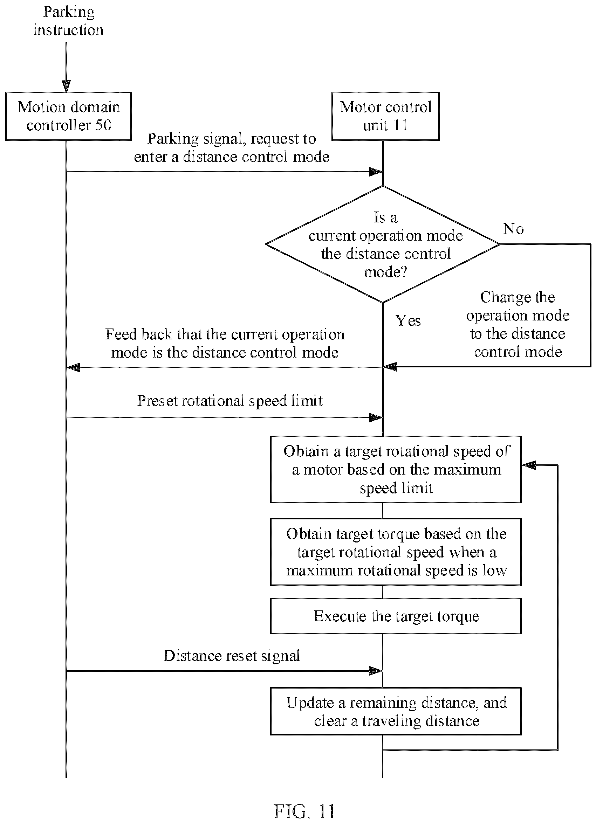

FIG. 11 is a diagram of signal interaction between the motor control unit 11 and the motion domain controller 50 according to an embodiment of this application. A process of the signal interaction between the motor control unit 11 and the motion domain controller 50 in FIG. 11 is not described in detail herein again.

Based on the electric vehicle 01, the powertrain 10, and the motor control unit 11 provided in the foregoing embodiments of this application, an embodiment of this application further provides an automatic parking assist control method for the electric vehicle 01. The automatic parking assist control method specifically includes:
In response to the parking signal, the motion domain controller 50 outputs the distance signal. The parking signal indicates that the electric vehicle 01 is in the parking state, and the distance signal indicates the distance between the current location and the target parking location of the electric vehicle 01.

In response to the distance signal, the motor control unit 11 directly controls the motor 12 to output the torque to drive the electric vehicle 01 to travel by the distance indicated by the distance signal.

In a process in which the motor 12 drives the electric vehicle 01 to travel by the distance indicated by the distance signal, the torque output by the motor 12 is not equal to the torque value indicated by the torque signal.

In the automatic parking assist control method provided in this application, the motion domain controller 50 first receives the location, of the electric vehicle 01, determined by the sensing system like the radar of the electric vehicle 01. Then, the motion domain controller 50 determines the preset parking distance based on the distance between the current location and the target parking location of the electric vehicle 01, and sends the distance to the motor control unit 11. In response to the parking signal, the motor control unit 11 stops controlling the motor 12 to output the instruction based on the torque indicated by the torque signal, but directly controls the motor 12 to output the torque.

In an embodiment, the control method includes:
In response to the distance signal, the motor control unit 11 determines the target rotational speed and the target torque of the motor 12 based on the distance indicated by the distance signal, controls the rotational speed of the motor 12 to be the target rotational speed, and controls the torque to be the target torque.

In an embodiment, the control method includes:
In a process in which the motor control unit 11 receives the distance signal, in response to the brake pedal stroke of the electric vehicle 01 being greater than the preset brake pedal stroke, the accelerator pedal stroke being greater than the preset accelerator pedal stroke, or the slip rate of the wheel 40 being greater than the preset slip rate, the motor control unit 11 controls the torque value output by the motor 12 to be equal to the torque value indicated by the torque signal.

Although this application is described with reference to specific features and embodiments thereof, it is clear that various modifications and combinations may be made to them without departing from the protection scope of this application. Correspondingly, the specification and accompanying drawings are merely example description of this application defined by the appended claims, and are considered as any of and all modifications, variations, combinations or equivalents that cover the scope of this application.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A motor control unit having a parking control function for an electric vehicle, wherein the motor control unit is configured to control a motor to output torque;
in a traveling process of the electric vehicle, the motor control unit is configured to:
in response to a torque signal, control the motor to output a torque value indicated by the torque signal; and
in a parking process of the electric vehicle, the motor control unit is configured to:
in response to a distance signal, directly control a rotor of the motor to rotate by a preset angle, wherein a distance that the rotor of the motor rotates by the preset angle to drive the electric vehicle to travel is a distance indicated by the distance signal.

2. The motor control unit according to claim 1, wherein in the parking process of the electric vehicle, the motor control unit is configured to: stop controlling, based on an indication of the torque signal, the motor to output the torque, and control, based on the distance indicated by the distance signal, the rotor of the motor to rotate by the preset angle.

3. The motor control unit according to claim 1, wherein the distance signal indicates a preset parking distance, in the parking process of the electric vehicle, the motor control unit is configured to directly control the motor to output the torque to control the rotor of the motor to rotate by the preset angle, to drive the electric vehicle to travel by the preset parking distance, and the preset parking distance is a distance between an initial vehicle location and a target parking location in the parking process of the electric vehicle.

4. The motor control unit according to claim 1 or 2, wherein the motor control unit controls, based on the distance indicated by the distance signal, the rotor of the motor to rotate by the preset angle, the motor control unit controls the torque output by the motor to be different from the torque value indicated by the torque signal;
wherein in the process in which the motor control unit controls, based on the distance indicated by the distance signal, the rotor of the motor to rotate by the preset angle,
the torque value indicated by the torque signal remains unchanged; or
the torque value indicated by the torque signal is less than or equal to the torque that the motor control unit controls the motor to output.

5. The motor control unit according to claim 1, wherein in the parking process of the electric vehicle, the motor control unit is configured to:
in response to a remaining parking distance of the electric vehicle being greater than a first remaining distance, directly control a rotational speed of the motor to increase as the remaining parking distance decreases; and
in response to the remaining parking distance of the electric vehicle being less than a second remaining distance, directly control the rotational speed of the motor to decrease as the remaining parking distance decreases, wherein
the remaining parking distance is a distance between a location and a target parking location of the electric vehicle in the parking process, and the second remaining distance is less than the first remaining distance.

6. The motor control unit according to claim 5, wherein in the parking process of the electric vehicle, the motor control unit is configured to control the rotational speed of the motor to be less than a preset rotational speed limit, when the remaining parking distance of the electric vehicle is greater than the first remaining distance, the preset rotational speed limit increases as the remaining parking distance decreases, and when the remaining parking distance of the electric vehicle is less than the second remaining distance, the preset rotational speed limit decreases as the remaining parking distance decreases.

7. The motor control unit according to claim 3, wherein the motor control unit is configured to:
in a process of receiving the distance signal, in response to a distance reset signal, stop receiving the distance signal, and control the motor to drive the electric vehicle to travel by a distance indicated by the distance reset signal, wherein the distance reset signal indicates a distance between a current vehicle location of the electric vehicle and the target parking location.

8. The motor control unit according to claim 1, wherein in the parking process of the electric vehicle, the motor control unit is configured to:
in response to a brake pedal stroke of the electric vehicle being greater than a preset brake pedal opening, an accelerator pedal stroke being greater than a preset accelerator pedal opening, or a slip rate of a wheel being greater than a preset slip rate, stop controlling the motor based on the distance signal, and control the motor to output the torque value indicated by the torque signal.

9. The motor control unit according to claim 1, wherein the motor control unit comprises a resolver sensor, the motor control unit is configured to receive a rotational speed signal of the motor and a rotor angle signal from the resolver sensor, the rotational speed signal of the motor indicates a current rotational speed of the motor, and the rotor angle signal indicates a rotor rotation angle of the motor;
the motor control unit is configured to adjust a rotational speed of the motor based on the current rotational speed, of the motor, indicated by the rotational speed signal of the motor; and
the motor control unit is configured to: determine a parking traveling distance of the electric vehicle based on the rotor rotation angle indicated by a rotor rotation angle signal, and output a parking traveling distance signal, wherein the parking traveling distance signal indicates the parking traveling distance, and the parking traveling distance is a distance between a current vehicle location of the electric vehicle and an initial vehicle location.

10. The motor control unit according to claim 2, wherein operation modes of the motor control unit comprise a drive mode and a parking mode;
when the motor control unit operates in the drive mode, the motor control unit is configured to control the motor to output the torque value indicated by the torque signal, wherein the torque signal is from a vehicle control unit of the electric vehicle; and
in response to a parking signal and the distance signal, the motor control unit operates in the parking mode, the parking signal is used to control the motor control unit to stop controlling the motor based on the indication of the torque signal, and the motor control unit is configured to control the rotor of the motor to rotate by the preset angle.

11. The motor control unit according to claim 8, wherein the motor control unit is configured to: determine a target rotational speed based on the distance indicated by the distance signal or a distance indicated by a distance reset signal, determine target torque based on the target rotational speed, and control the motor to output the target torque;
the motor is configured to determine the target rotational speed based on a result of comparison between the distance indicated by the distance signal or the distance indicated by the distance reset signal and a traveling distance corresponding to a rotor angle signal; and
the motor control unit is configured to determine the target torque based on comparison between the target rotational speed and a current rotational speed, of the motor, indicated by a rotational speed signal of the motor.

12. A powertrain having a parking control function for an electric vehicle, wherein the powertrain comprises a motor control unit and a motor, and the motor control unit is configured to control the motor to output torque;
in a traveling process of the electric vehicle, the motor control unit is configured to:
in response to a torque signal, control the motor to output a torque value indicated by the torque signal; and
in a parking process of the electric vehicle, the motor control unit is configured to:
in response to a distance signal, directly control a rotor of the motor to rotate by a preset angle, wherein a distance that the rotor of the motor rotates by the preset angle to drive the electric vehicle to travel is a distance indicated by the distance signal;
wherein the motor control unit is configured to receive a parking signal and the distance signal, and the motor control unit is specifically configured to:
in response to the parking signal, stop controlling, based on an indication of the torque signal, the motor to output the torque, and control, based on the distance indicated by the distance signal, the rotor of the motor to rotate by the preset angle.

13. The powertrain according to claim 12, wherein in the parking process of the electric vehicle, the motor control unit is configured to:
directly control the motor to output the torque to control the rotor of the motor to rotate by the preset angle, to drive the electric vehicle to travel by the distance indicated by the distance signal, wherein in a process in which the motor control unit controls, based on the distance indicated by the distance signal, the rotor of the motor to rotate by the preset angle, the motor control unit controls the torque output by the motor to be not equal to the torque value indicated by the torque signal, wherein the torque value indicated by the torque signal remains unchanged, the torque value indicated by the torque signal is zero, or the torque value indicated by the torque signal is less than or equal to the torque that the motor control unit controls the motor to output.

14. A parking control method for an electric vehicle, wherein the electric vehicle comprises a vehicle control unit, the vehicle control unit is configured to send a torque signal to a motor control unit, the torque signal indicates a torque value, and the control method comprises:
in response to a parking instruction, outputting, by a motion domain controller, a distance signal and a parking signal, wherein the parking instruction and the parking signal indicate that the electric vehicle is in a parking state, and the distance signal indicates a distance between a current location and a target parking location of the electric vehicle; and
in response to the parking signal and the distance signal, directly controlling, by the motor control unit, a motor to output torque to control the motor to rotate by a preset angle, to drive the electric vehicle to travel by the distance indicated by the distance signal, wherein a distance that the rotor of the motor rotates by the preset angle to drive the electric vehicle to travel is the distance indicated by the distance signal, wherein
in a process in which the motor drives the electric vehicle to travel by the distance indicated by the distance signal, the torque output by the motor does not change with the torque value indicated by the torque signal.

15. The control method according to claim 14, wherein the control method comprises:
in response to the distance signal, determining, by the motor control unit, a target rotational speed and target torque of the motor based on the distance indicated by the distance signal, controlling a rotational speed of the motor to be the target rotational speed, and controlling the torque to be the target torque;
in a process in which the motor control unit receives the distance signal, in response to a brake pedal stroke of the electric vehicle being greater than a preset brake pedal stroke, an accelerator pedal stroke being greater than a preset accelerator pedal stroke, or a slip rate of a wheel being greater than a preset slip rate, controlling, by the motor control unit, a torque value output by the motor to be equal to the torque value indicated by the torque signal.
